# EUROPEAN PATENT SPECIFICATION

(11) **EP 3 702 287 B1**
(45) Date of publication and mention of the grant of the patent: **05.04.2023**
(21) Application number: 19159894.5
(22) Date of filing: 28.02.2019
(51) Int. Cl.: B64D 37/16, B64F 1/28, B67D 7/34

(54) **FUELLING VALVE**
BETANKUNGSVENTIL
SOUPAPE DE REMPLISSAGE DE CARBURANT

(43) Date of publication of application: 02.09.2020
(73) Proprietor: Dunlop Oil & Marine Limited, Grimsby, Ne Lincolnshire, DN31 2SY (GB)
(72) Inventor: Bishop, Simon, Beverley, HU17 9TF (GB)
(74) Representative: Continental Corporation

(56) References cited:
- WO-A1-98/20342
- DE-A1-102011 112 417
- GB-A- 2 401 975
- US-A- 5 722 469
- US-A1- 2018 209 940
- Anonymous: "Gravimeter - Wikipedia", , 5 October 2021 (2021-10-05), pages 1-3, XP055847860, Retrieved from the Internet: URL:https://de.wikipedia.org/wiki/Gravimet er [retrieved on 2021-10-05]

## Description

The present invention relates to a fuelling valve as per the preamble of Patent Claim 1, to a tanker vehicle having a fuelling valve of said type as per Patent Claim 9, and to a fuelling facility having a fuelling valve of said type as per Patent Claim 10.

In the aviation sector, various fuels are used for different engines or turbines. For example, various kerosenes are used for the gas turbine powerplants of jet and turboprop aircraft and of helicopters. In the case of gasoline, a distinction is made between MoGas (Motor Gasoline) as motor vehicle gasoline and AVGas (Aviation Gasoline) as aircraft gasoline. AVGas is used for piston engine aircraft and is configured for use at higher altitudes than MoGas. Diesel fuel may also be used for aircraft engines.

Similarly, in the case of land vehicles, such as in particular passenger motor vehicles, a distinction is made between diesel and gasoline fuels, wherein the gasoline fuels themselves can be differentiated for example into Normal and Super.

Here, gasoline, diesel and kerosene constitute different fuel types, which can be differentiated into different fuel grades, such as for example MoGas and AVGas in the case of aircraft and Normal gasoline and Super gasoline in the case of land vehicles.

All fuel types are reserved for particular types of engines or powerplants, that is to say cannot be interchanged with one another. Therefore, during the refuelling of a vehicle, it must be ensured that the fuel type for which the engine or the powerplant is configured is used. This applies equally for example to land vehicles, such as for example heavy goods vehicles, passenger motor vehicles and the like, and to aircraft, such as for example aeroplanes, helicopters and the like.

To prevent a mix-up of the fuel types or fuel grades during the fuelling of aircraft, it is therefore known for the filler neck of the tank opening and the filler pipe of the fuelling valve to have a mutually corresponding form specifically when the fuel that the tank of the aircraft is intended to receive can be dispensed via the filler pipe. The insertion of a filler pipe of one fuel type or one fuel grade into a tank opening of a different fuel type or fuel grade can simultaneously be ruled out in this way. For example, an oval filler pipe of a fuelling valve of a tanker truck or of a fuelling pump for AVGas can be inserted into a corresponding oval filler neck of the tank opening of an aircraft tank for AVGas but cannot be inserted into a circular filler neck of the tank opening of an aircraft tank for MoGas, and vice versa. This is intended to structurally prevent a mix-up of the fuel types or fuel grades during the filling of a tank of an aircraft. This may be supported by the labelling and graphical illustration of the fuel type or fuel grade to be used.

A situation may however arise in which the filler neck of the tank opening of the aircraft or the filler pipe of the fuelling valve are exchanged and can thus no longer fulfil the above-stated purpose. Also, the engine or the powerplant of the aircraft may be exchanged over the course of its use, such that the fuel type or fuel grade permitted by the form of the filler neck of the tank opening is no longer correct.

It can therefore no longer be ensured in the above-described manner, by way of a structural correspondence of filler neck of the tank opening and filler pipe of the fuelling valve, that the correct fuel type or fuel grade for the engine or the powerplant of an aircraft is introduced into the tank and used. This is a problem because, in order to prevent damage to the engine or to the powerplant, an incorrectly refuelled aircraft therefore cannot be used. If this is identified in good time, at least the content of the tank of the aircraft must be exchanged. If the aircraft is operated, or it is attempted to operate the aircraft, with the incorrect fuel type, this can lead to damage to the engine or to the powerplant.

Similar considerations also apply to other vehicles such as for example land vehicles, in the case of which a distinction must be made for example between the fuel types of diesel and gasoline, for example in the case of passenger motor vehicles. Land vehicles and aircraft can be referred to jointly as vehicles, and may in particular also encompass maritime vessels and spacecraft.

GB 2401975 A describes an Incorrect Fuel Filling Prevention Device which has a fuel-type Sensor Unit fitted into a Fuel Filler Pipe which senses if the incorrect type of fuel is being delivered to the Fuel Tank. Signals from fuel sensor are transmitted to a Controller Unit. Controller Unit controls a Valve Actuating Mechanism which closes a Valve to prevent fuel filling the Fuel tank. Controller Unit 30 also activates Audible and Visual Warning devices to warn the fuel filling operative of their error of trying to fill the Fuel Tank with the incorrect type of fuel. After a predetermined time the Controller Unit deactivates warning devices and valve-actuating mechanism in order to allow the Fuel Tank to be filled with the correct type of fuel.

WO 9820342 A1 describes a method of distinguishing between liquids e.g. to stop misfueling of vehicles, planes or boats involves controlling the liquid's movement between one tank and another, e.g. between a bulk tank and a vehicle, plane or boat, via a line between them and reversible closure means. The vapour in the second and/or first tank is analysed, the results compared to those of a standard or to those of the other tank and the results of the comparison used to control operation of the closure. A novel liquid dispenser e.g. for hydrocarbon fuels has associated with it a detector open to vapour from the receiving tank to achieve the above distinction, in particular one with a processor and controller to operate closure means e.g. the dispenser valve if the detector detects the wrong liquid.

US 2018/209940 A1 describes a fuel analyzer for a fuel dispensing environment including an ultrasonic transmitter configured to transmit an ultrasonic signal through a volume of fuel, an ultrasonic receiver configured to receive the ultrasonic signal, and processing circuitry. The processing circuitry is configured to receive an indication of transmission of the ultrasonic signal from the ultrasonic transmitter, receive an indication of receipt of the ultrasonic signal from the ultrasonic receiver, determine a time of flight of the ultrasonic signal, and determine a fuel purity based on the time of flight of the ultrasonic signal.

It is an object of the present invention to provide a fuelling valve of the type described in the introduction such that, during the refuelling of vehicles, in particular of aircraft, the use of the admissible fuel type and/or of the admissible fuel grade can be ensured or at least supported. At the least, it should be possible for this purpose to distinguish between at least two fuel types and/or between at least two fuel grades. It is at least the intention to provide an alternative to known fuelling valves.

The object is achieved according to the invention by means of a fuelling valve having the features according to Patent Claim 1, by means of a tanker vehicle having the features according to Patent Claim 9, and by means of a fuelling facility having the features according to Patent Claim 10.

Advantageous refinements are described in the dependent claims.

The present invention thus relates to a fuelling valve which is designed to convey a fuel via a filler pipe into a fuel container of a vehicle. The vehicle may be in particular a land vehicle or an aircraft. The fuel has a particular fuel type or fuel grade.

The fuelling valve is characterized by a sensor unit having a sensor element which is arranged and designed to detect a medium within the filler pipe by sensor means, wherein the sensor unit is designed to distinguish the medium detected by sensor means with regard to at least two fuel types and/or at least two fuel grades. This may be performed for example using ultrasound or infrared, as will be discussed in more detail further below.

The distinction between at least two fuel types or fuel grades may be performed in that one of the two fuel types or fuel grades can be identified and, in this way, the other fuel type or fuel grade can be ruled out. Here, it may be sufficient to define a threshold value of a measurement variable, such as for example the density of the medium, and to assign the medium to one fuel type or fuel grade or to the other fuel type or fuel grade depending on whether the threshold value is undershot or overshot.

It is preferably possible to make a distinction between more than two fuel types or fuel grades, for example by means of a correspondingly greater number of threshold values of the same measurement variable and/or through the use of at least one further measurement variable and at least one corresponding threshold value. This can expand the possibilities for the use of the present invention.

According to the invention, it is possible in this way to identify, at the fuelling valve, which of the fuel types or fuel grades under consideration is or was already present in the fuel container to be filled, because fuels normally form, in the fuel container, a gas or gas mixture which can escape to the outside through the opened filler neck of the tank opening during the refuelling process. If the fuelling valve according to the invention is inserted into the opened filler neck of the tank opening, then the gas or the gas mixture can rise into the filler pipe of the fuelling valve and be detected there by sensor means. In this way, a determination of at least one physical and/or chemical parameter of the gas or of the gas mixture can be performed, and in this way a conclusion can be drawn regarding the fuel type or fuel grade which is or was already present in the fuel container to be filled. This information can be utilized for the refuelling of the vehicle, as will be discussed by way of example below.

It is likewise possible for the filler pipe of the fuelling valve, as it is inserted into the open filler neck of the tank opening, to come into contact with residual quantities of the fuel type or fuel grade that is already or was previously present in the fuel container to be filled, and for these residual quantities to be detected by sensor means. This can permit the above-described detection of the medium by sensor means for liquids. For this purpose, the filler pipe of the fuelling valve, or its end facing toward the open filler neck of the tank opening, can be deliberately brought into contact, by a user, for example with the edge of the open filler neck of the tank opening and/or with the inner side of an opened or removed closure of the filler neck of the tank opening, because a residual quantity of the fuel type or fuel grade that is already or was previously present in the fuel container to be filled can adhere there which is sufficient to be able to perform the above-described detection of the medium as liquid by sensor means.

According to one aspect of the present invention, the sensor element is designed to detect the density of the medium within the filler pipe by sensor means, wherein the sensor unit is designed to distinguish the medium detected by sensor means with regard to at least two fuel types and/or at least two fuel grades on the basis of its density. By means of the density of the medium, it is possible both in the case of gases and in the case of liquids for a distinction to be made between at least two fuel types and/or at least two fuel grades, such that the above-described characteristics and advantages of the present invention can be implemented for example in this manner.

According to a further aspect of the present invention, the sensor element is designed to detect the medium, preferably the density of the medium, within the filler pipe by sensor means using ultrasound. This aspect of the present invention is based on the realization that the speed of sound is dependent on the medium and in particular on the gas through which the sound propagates. For this purpose, an ultrasound signal can be emitted in the direction of the medium by means of an ultrasound transmitter of the sensor element, said ultrasound signal can be reflected on the opposite side of the filler pipe, and said ultrasound signal can be received as an echo by an ultrasound receiver of the sensor element. With known geometrical conditions of the filler pipe, the medium or the density thereof can be inferred from the propagation time.

This aspect of the present invention is based on the realization that heavy gases reduce the speed of sound in relation to relatively light gases, such that these can be distinguished from one another. For example, the density of MoGas lies in the range from approximately 785 g/l to approximately 811 g/l, and the density of AVGas lies in the range from approximately 703 g/l to approximately 780 g/l. These two fuel types can thus be adequately distinguished from one another for example by means of a threshold value of approximately 783 g/l.

In this way, too, the ratio between a fuel gas and the ambient air can be detected by sensor means, such that a distinction can be made between different fuel gases or mixtures of fuel gas and ambient air.

According to a further aspect of the present invention, the sensor element is designed to detect a gas as medium, preferably the density of a gas as medium, within the filler pipe by sensor means. This can make the above-described corresponding possibilities for detection by sensor means applicable to gases.

It can be advantageous to detect a gas because a gas, as described above, can rise of its own accord into the filler pipe of the fuelling valve and be detected by sensor means there. This can permit the arrangement of the sensor element in the interior of the filler pipe of the fuelling valve, such that said sensor element can be protected against external influences by the filler pipe. Also, the feed of the medium to the sensor element can be made easier, because the gas can disperse, rise into the filler pipe of the fuelling valve, and reach the sensor element, of its own accord.

According to a further aspect of the present invention, the sensor element is arranged and oriented so as to detect the density of the medium within the filler pipe at least substantially perpendicular to the extent of the filler pipe by sensor means. This can permit the detection by sensor means in defined directions, such that the accuracy of the detection by sensor means can be improved.

According to a further aspect of the present invention, the fuelling valve is designed to communicate the fuel type and/or the fuel grade to a user by means of an output element. The output element may be designed to provide an optical output and/or an acoustic output. An output may for example also be realized by means of a vibration. In this way, the identification that has been performed can be communicated to a user.

An optical output may for example be realized in simple form by means of a single, monochromatic illuminant such as for example by means of an LED or a similar simple, space-saving and/or inexpensive display element. In this way, it is for example possible for a first fuel type or fuel grade to be indicated by means of illumination, and for a second fuel type or fuel grade to be indicated by means of non-illumination. It is also possible for correspondence between the fuel type or fuel grade in the fuel container to be filled and the fuel type or fuel grade of the fuel container of the fuelling valve to be indicated by means of illumination; non-illumination can then signify non-correspondence, or vice versa. Also, illumination may indicate correspondence and flashing may indicate non-correspondence, or vice versa. Other significations or light signals are likewise possible.

Alternatively, a distinction between such correspondence and non-correspondence may also be realized for example by means of two individual illuminants of different colour. For example, green illumination may indicate correspondence and red illumination or red flashing may indicate non-correspondence.

Use may also be made of more complex display elements, such as for example an LED display, in order to display such items of information as graphical depictions, for example by means of symbols. It is additionally or alternatively also possible for corresponding items of text information to be output. This can enable the user to identify the detected fuel type or fuel grade by name. This can permit the outputting of more comprehensive items of information in terms of content from the fuelling valve to the user, for example in order to display the detected fuel type or fuel grade by way of a designation and possibly further additional items of information. The colour of the text information, such as for example red or green, may also be used. This can also make the information clearer to the user. By means of the above-described single illuminant, this may alternatively or additionally be realized by virtue of different colours of illuminant, such as for example LEDs, being operated or not operated in a manner dependent on the detected fuel type or fuel grade.

Alternatively or in addition, the above-described characteristics may also be translated by means of acoustic communications. For example, it is for example possible for a first fuel type or fuel grade to be indicated by means of the outputting of a signal tone, and for a second fuel type or fuel grade to be indicated by means of the absence of the signal tone. It is also possible for correspondence between the fuel type or fuel grade in the fuel container to be filled and the fuel type or fuel grade of the fuel container of the fuelling valve to be acoustically output by means of the outputting of a signal tone; the absence of the signal tone can then signify non-correspondence, or vice versa. It is also possible for the outputting of a first signal tone to indicate correspondence and for the outputting of a second signal tone to indicate non-correspondence, or vice versa. Other significations or signal tones are likewise possible.

Alternatively or in addition, haptic feedback may also be provided to the user. For example, the fuelling valve or the handle thereof may be caused to oscillate or vibrate if there is non-correspondence between the fuel type or fuel grade in the fuel container to be filled and the fuel type or fuel grade of the fuel container of the fuelling valve, in order to deter the user from continuing the filling process. It is also possible for a vibration to be generated in the case of a first fuel type or fuel grade, which vibration may be omitted in the case of a second fuel type or fuel grade. It is also possible, in the case of two different fuel types of fuel grades, for different vibrations with regard to their frequency and/or intensity, that is to say amplitude, to be generated, in order to hereby enable the user to make a distinction.

The use of such haptic feedback to the user may be advantageous because it cannot be influenced by ambient noises and by the light conditions in the surroundings. This may occur in the case of acoustic and/or optical outputs to the user as described above. In particular, a vibration of the fuelling valve or of the handle thereof in the case of non-correspondence can be understood particularly intuitively by the user, and can reliably prompt the user not to continue the filling process.

According to a further aspect of the present invention, the fuelling valve is designed to make the fuel type and/or the fuel grade available as information to a further apparatus in wired and/or wireless fashion. This may be realized wirelessly by means of near-field communication, Bluetooth, WLAN, mobile radio networks and the like. In this way, the items of information that may be present at the fuelling valve can be made available in part or in full to other apparatuses, such as for example a tanker vehicle or a fuelling pump, as will be described in more detail further below. This may permit further possible uses of these items of information. Such items of information may also be collected and evaluated for example in a cloud.

According to a further aspect of the present invention, the fuelling valve is designed to, in a manner dependent on the fuel type and/or the fuel grade, output feedback to a user as regards whether or not the fuel type and/or fuel grade of the medium detected by sensor means corresponds to a predetermined fuel type and/or fuel grade. The predetermined fuel type or fuel grade may be that which is already or was previously present in the fuel container, which is to be filled, of the vehicle, and with which it is thus intended or permissible to perform refuelling.

As described above, the outputting of such information to the user may be performed optically, acoustically and/or haptically. By implementing a restriction to this information in the distinction of the fuel types or fuel grades, it is possible to simplify the evaluation, processing and output. At the same time, this information may be sufficient to allow the user to continue the filling process if an admissible fuel type or fuel grade is used, or to deter the user from this if this is not the case. This may be sufficient to ensure or at least support the use of the admissible fuel type and/or of the admissible fuel grade.

According to a further aspect of the present invention, the fuelling valve is designed to permit or prevent the conveying of the fuel in a manner dependent on the fuel type and/or the fuel grade. This may be realized for example by means of a valve of the fuelling valve, which must be actuated in order to convey the fuel via the filler pipe of the fuelling valve. Said valve may be an existing valve of the fuelling valve, which must for example be mechanically actuated by a user in order to trigger the conveying of the fuel. Said valve may for example be locked by means of a blocking element which it is necessary to release, and may be automatically released by the fuelling valve only if correspondence of the fuel types or fuel grades is present as described above. Otherwise, the blockage may be maintained, such that the user cannot actuate the valve and thus trigger the conveying of the fuel in an undesired manner. Alternatively, in addition to the valve mentioned above, it is also possible for a further safety valve to be arranged preferably between the valve and the filler pipe, which safety valve, as described above, is normally closed and is provided so as to be automatically opened by the fuelling valve in the case of correspondence of the fuel types or fuel grades. This can in each case rule out human error during the filling of a fuel container of said type.

The present invention also relates to a tanker vehicle having a fuelling valve as described above. In this way, the above-described characteristics and advantages of a fuelling valve according to the invention can be used in a corresponding tanker vehicle, which may serve equally for the direct refuelling of a vehicle and for the dispensing of a fuel into a mobile or static fuel container.

The present invention also relates to a fuelling facility, preferably a fuelling pump, having a fuelling valve as described above. In this way, the above-described characteristics and advantages of a fuelling valve according to the invention can be used in the case of a corresponding fuelling facility, which may be a constituent part of a tanker vehicle, as described above, and of a filling station or of some other mobile or static facility. In particular, this may be a fuelling pump of a filling station or the like.

According to one aspect of the present invention, the tanker vehicle or the fuelling facility is designed to receive the fuel type and/or the fuel grade as information in wired and/or wireless fashion from the fuelling valve. In this way, this information can be utilized at the tanker vehicle or at the fuelling facility, as will be described by way of example below.

According to a further aspect of the present invention, the tanker vehicle or the fuelling facility is designed to communicate the fuel type and/or the fuel grade to a user by means of an output element. In this way, the aspects described above on the basis of the fuelling valve according to the invention can be applied to the tanker vehicle or to the fuelling facility and utilized there.

According to a further aspect of the present invention, the tanker vehicle or the fuelling facility is designed to permit or prevent the conveying of the fuel in a manner dependent on the fuel type and/or the fuel grade. In this way, the aspects described above on the basis of the fuelling valve according to the invention can be applied to the tanker vehicle or to the fuelling facility and utilized there.

According to a further aspect of the present invention, the tanker vehicle or the fuelling facility is designed to, in a manner dependent on the fuel type and/or the fuel grade, output feedback to a user as regards whether or not the fuel type and/or fuel grade of the medium detected by sensor means corresponds to a predetermined fuel type and/or fuel grade. In this way, the aspects described above on the basis of the fuelling valve according to the invention can be applied to the tanker vehicle or to the fuelling facility and utilized there.

An exemplary embodiment and further advantages of the invention will be discussed below in conjunction with the following figures, in which:
Figure 1 shows a perspective schematic illustration of an aircraft and of a tanker truck;
Figure 2 shows a detail view of Figure 1;
Figure 3 shows a schematic illustration of a fuelling valve according to the invention; and
Figure 4 shows a detail view of Figure 3.

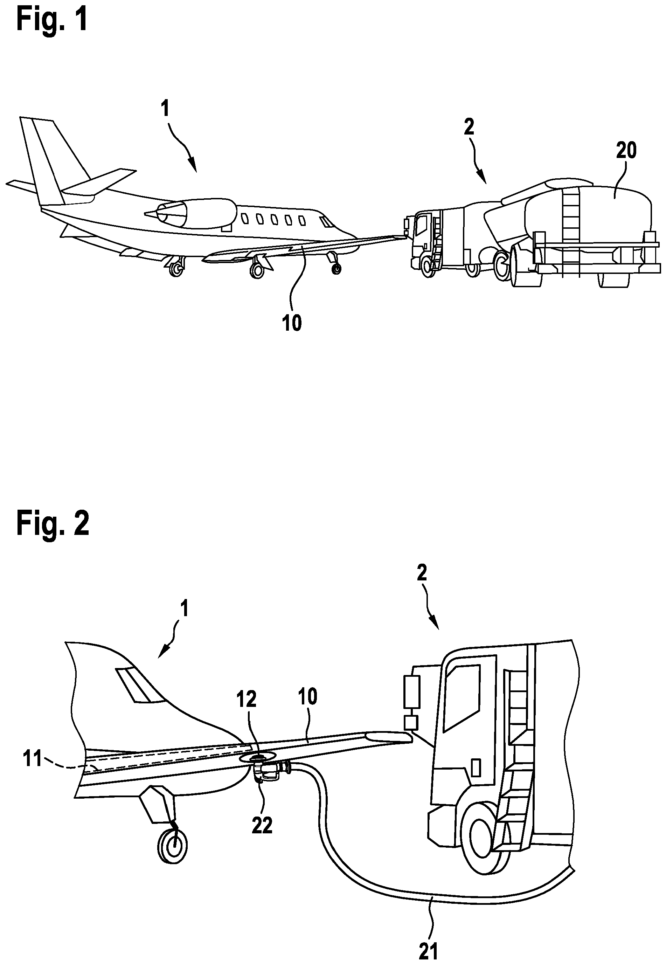

Figure 1 shows a perspective schematic illustration of an aircraft 1 and of a tanker truck 2. Figure 2 shows a detail view of Figure 1. The aircraft 1 is considered as a general example for vehicles 1. This likewise applies to the tanker truck 2, because the invention is for example also applicable to a static fuelling pump 2.

The aircraft 1 has, inter alia, a wing 10 in which there is arranged at least one fuel container 11 in the form of a tank 11. The tank 11 of the aircraft 1 is accessible via a closable tank neck 12 on the underside of the wing 10. The tank neck 12 may also be referred to as filler neck 12.

The tanker truck 2 itself has, inter alia, a fuel container 20, which may likewise be referred to as tank 20. The tank 20 of the tanker truck 2 is connected by means of a conveying device in the form of a fuel pump (not illustrated) to a fuel hose 21, which may also be referred to as fuelling hose 21 or as tank hose 21. At the opposite end, the fuelling hose 21 is connected to a fuelling valve 22, which may also be referred to as fuelling nozzle 22.

By means of the fuel pump of the tanker truck 2, fuel from the interior of the tank 20 of the tanker truck can be conveyed through the fuelling hose 21 to the fuelling nozzle 22 and dispensed from the latter into the tank 11 of the aircraft 1. For this purpose, the fuelling nozzle 22 must firstly be inserted into and fixed in the filler neck 12.

In order, during such a filling process, to rule out a situation in which for example an unsuitable fuel grade such as for example AVGas is dispensed from the tanker truck 2 despite the aircraft 1 requiring MoGas, a fuelling nozzle 22 according to the invention is used as follows:

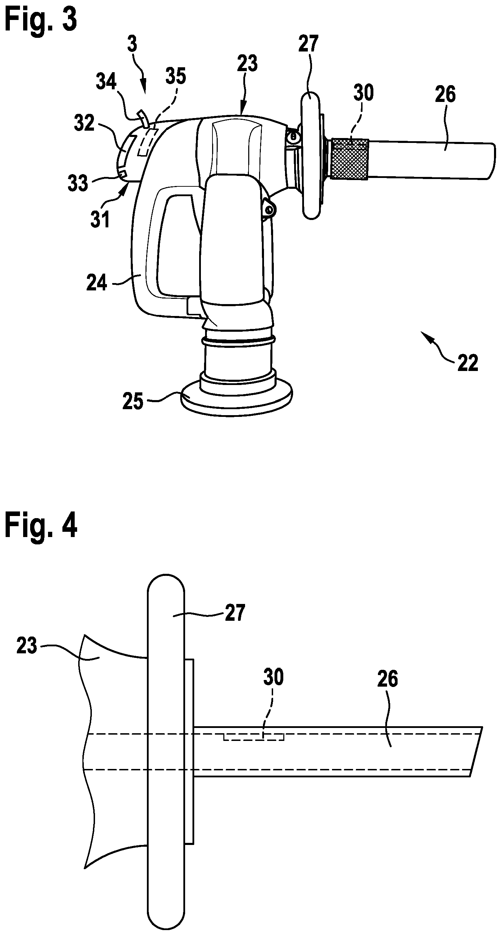

Figure 3 shows a schematic illustration of a fuelling valve 22 according to the invention or of a fuelling nozzle 22 according to the invention. Figure 4 shows a detail view of Figure 3.

The fuelling nozzle 22 has a fuelling valve housing 23 or a fuelling nozzle housing 23, on which a handle 24 is formed in order to be gripped or grasped by a hand of a user. The fuelling nozzle 22 has a hose connector 25, which is designed to be connected in fuel-tight fashion to the fuelling hose 21. At the opposite end, the fuelling nozzle 22 has a filler pipe 26, which is designed to be inserted into the filler neck 12 of the aircraft 1. The insertion of the filler pipe 26 of the fuelling nozzle 22 into the filler neck 12 of the aircraft 1 is limited by a stop 27 of the fuelling nozzle 22. Via the filler pipe 26, the fuel can be dispensed from the fuelling nozzle 22 into the filler neck 12 of the aircraft 1.

According to the invention, the fuelling nozzle 22 has a sensor unit 3, which comprises a sensor element 30 in the form of a density sensor 30, which is realized as an ultrasound sensor 30. The ultrasound sensor 30 is arranged in the interior of the filler neck 26 in the immediate vicinity of the stop 27 and is arranged so as to be oriented perpendicular to the substantial direction of extent of the filler pipe 26, that is to say perpendicular to the flow direction of the fuel, into the interior of the filler pipe 26.

The ultrasound sensor 30 has an ultrasound transmitter (not illustrated) which can emit an ultrasound signal perpendicularly into the filler pipe 26 in the direction of the fuel. The ultrasound signal can propagate perpendicularly through the fuel and be reflected on the opposite inner side of the filler pipe 26, cf. for example Figure 4. The reflected echo of the ultrasound signal can be received by an ultrasound receiver (not illustrated) of the ultrasound sensor 30.

With known geometrical conditions of the interior of the filler pipe 26, the medium or the density thereof can be inferred from the propagation time of the ultrasound signal. This may be performed by a central unit 31 of the sensor unit 3, which can receive the measured signal of the density from the ultrasound sensor 30. If necessary, signal processing of the measured signal may be performed, for example by filtering or the like, by the ultrasound sensor 30 and/or by the central unit 31.

The measured signal may be compared by the central unit 31 with a predetermined threshold value of a density. If the density detected by sensor means lies below the predetermined threshold value, then for example AVGas may be identified as the fuel grade; if the density detected by sensor means lies above the predetermined threshold value, then for example MoGas may be identified as the fuel grade.

This identification of the fuel grade may be performed at the start of a filling process, before the conveying of the fuel is performed. For this purpose, the fuelling nozzle 22 is inserted with its filler pipe 26 into the filler neck 12 of the aircraft 1 by the user. It is then possible for the gas mixture situated in the interior of the tank 11 of the aircraft 1 to rise into the interior of the filler pipe 26 of the fuelling nozzle 22 and reach the ultrasound sensor 30 thereof. As described above, it is possible by means of the density of the gas mixture to identify the fuel grade which is still situated as a residual quantity, or which was previously situated, in the tank 11 of the aircraft 1, because enough of this fuel grade has been present in the gas mixture to be detected by sensor means.

The identified fuel grade may then be displayed optically to the user by the sensor unit 3 by means of an output element 32 in the form of a display element 32. This may for example comprise the text designation of the fuel grade as "AVGas" or "MoGas".

It is also possible for a comparison of the identified fuel grade with a predetermined fuel grade, which is for example predefined by the user and corresponds to the fuel grade that is present in the tank 20 of the tanker truck 2, to be performed by the sensor unit 3. During this comparison, the sensor unit 3 may detect whether the two fuel grades correspond, and thus filling of the aircraft 1 is possible in the first place.

If this is the case, then this can be indicated to the user for example by means of a green lamp of the sensor unit 3 or by means of green lettering of the text designation of the fuel grade. Otherwise, this may be indicated for example by means of a red lamp, which may possibly additionally flash, in order to prompt the user not to carry out the filling of the aircraft 1. In this case, a vibration of the filling nozzle 22 or of the handle 24 thereof may also be performed in order to as reliably as possible gain the attention of the user.

Furthermore, an additional valve (not illustrated) may be provided within the fuelling nozzle 22, which additional valve is automatically closed by the sensor unit 3 or by the fuelling nozzle 22, or automatically remains closed, in the event of non-correspondence of the fuel grades, in order to prevent the filling of the aircraft 1 even if the user has not noticed the fact that non-correspondence has been identified. The valve may otherwise be automatically opened. Alternatively or in addition, an existing valve, which must be opened by the user in order to perform the filling process, may be automatically blocked by the sensor unit 3 or by the fuelling nozzle 22, in order to achieve the above-described purpose in this way also.

The information relating to the identified fuel grade or the information relating to correspondence or non-correspondence may also be communicated, for example wirelessly, for example to the tanker truck 2, by means of a communication element 34 in the form of a transmitter/receiver unit 34. At said tanker truck 2, the items of information described above may, as described above, be utilized additionally or alternatively. In particular, in the event of non-correspondence, the conveying of the fuel by the fuel pump of the tanker truck 2 may be prevented.

By means of an operator control element 33 of the sensor unit 3, inputs by the user can be imparted to the sensor unit 3. This may for example comprise the presetting of the predetermined fuel grade that is present in the tanker truck 2. It is also possible, for example, for items of information output to the user by the display element 32 to be acknowledged by the user by means of the operator control element 33. The operator control element 33 may, for this purpose, have at least one button and preferably multiple buttons or a touch display.

The sensor unit 3 has an electrical energy store 35 in the form of an accumulator 35. In this way, the sensor unit 3 can be operated autonomously, and can be retrofitted or used as an additional independent element in a known fuelling nozzle 22, without significantly influencing the construction thereof. This can keep the costs for implementing the present invention low.

### List of reference designations

- 1: Vehicle; aircraft
- 10: Wing
- 11: Fuel container; tank
- 12: Tank neck; filler neck
- 2: Tanker truck; fuelling pump
- 20: Fuel container; tank
- 21: Fuel hose; fuelling hose; tank hose
- 22: Fuelling valve; fuelling nozzle
- 23: Fuelling valve housing; fuelling nozzle housing
- 24: Handle
- 25: Hose connector
- 26: Filler pipe
- 27: Stop
- 3: Sensor unit
- 30: Sensor element; density sensor; ultrasound sensor
- 31: Central unit
- 32: Output element; display element
- 33: Operator control element
- 34: Communication element; transmitter/receiver unit
- 35: Electrical energy store; accumulator

## Claims

1. Fuelling valve (22),
comprising a filler pipe (26),
wherein the fuelling valve (22) is designed to convey a fuel via the filler pipe (26) into a fuel container (11) of a vehicle (1),
further comprising a sensor unit (3) having a sensor element (30) which is arranged and designed to detect a medium within the filler pipe (26) by sensor means,
**characterized in that**
the sensor element (30) is designed to detect the density of the medium within the filler pipe (26) by sensor means,
and **in that** the sensor unit (3) is designed to distinguish the medium detected by the sensor means with regard to at least two fuel types and/or at least two fuel grades on the basis of its density.

2. Fuelling valve (22) according to Claim 1, **characterized in that**
the sensor element (30) is designed to detect the density of the medium within the filler pipe (26) by sensor means using ultrasound.

3. Fuelling valve (22) according to any of the preceding claims, **characterized in that**
the sensor element (30) is designed to detect the density of a gas as medium within the filler pipe (26) by the sensor means

4. Fuelling valve (22) according to any of the preceding claims, **characterized in that**
the sensor element (30) is arranged and oriented so as to detect the density of the medium within the filler pipe (26) at least substantially perpendicular to the extent of the filler pipe (26) by the sensor means

5. Fuelling valve (22) according to any of the preceding claims, **characterized in that**
the fuelling valve (22) is designed to communicate the fuel type and/or the fuel grade to a user by means of an output element (32).

6. Fuelling valve (22) according to any of the preceding claims, **characterized in that**
the fuelling valve (22) is designed to make the fuel type and/or the fuel grade available as information to a further apparatus in wired and/or wireless fashion.

7. Fuelling valve (22) according to any of the preceding claims, **characterized in that**
the fuelling valve (22) is designed to, in a manner dependent on the fuel type and/or the fuel grade, output feedback to a user as regards whether or not the fuel type and/or fuel grade of the medium detected by sensor means corresponds to a predetermined fuel type and/or fuel grade.

8. Fuelling valve (22) according to any of the preceding claims, **characterized in that**
the fuelling valve (22) is designed to permit or prevent the conveying of the fuel in a manner dependent on the fuel type and/or the fuel grade.

9. Tanker vehicle (2) having
a fuelling valve (22) according to any of Claims 1 to 8.

10. Fuelling facility (2), preferably fuelling pump (2), having a fuelling valve (22) according to any of Claims 1 to 8.

11. Tanker vehicle (2) according to Claim 9 or fuelling facility (2) according to Claim 10, **characterized in that**
the tanker vehicle (2) or the fuelling facility (2) is designed to receive the fuel type and/or the fuel grade as information in wired and/or wireless fashion from the fuelling valve (22).

12. Tanker vehicle (2) according to Claim 11, **characterized in that**
the tanker vehicle (2) or the fuelling facility (2) is designed to communicate the fuel type and/or the fuel grade to a user by means of an output element (32).

13. Tanker vehicle (2) according to Claim 11 or 12, **characterized in that**
the tanker vehicle (2) or the fuelling facility (2) is designed to permit or prevent the conveying of the fuel in a manner dependent on the fuel type and/or the fuel grade.

14. Tanker vehicle (2) according to any of Claims 11 to 13, **characterized in that**
the tanker vehicle (2) or the fuelling facility (2) is designed to, in a manner dependent on the fuel type and/or the fuel grade, output feedback to a user as regards whether or not the fuel type and/or fuel grade of the medium detected by sensor means corresponds to a predetermined fuel type and/or fuel grade.

## Patentansprüche

1. Betankungsventil (22),
aufweisend einen Einfüllstutzen (26),
wobei das Betankungsventil (22) dazu ausgebildet ist, einen Treibstoff über den Einfüllstutzen (26) in einen Treibstoffbehälter (11) eines Fahrzeugs (1) zu leiten, ferner aufweisend eine Sensoreinheit (3), die ein Sensorelement (30) aufweist, die dazu angeordnet und ausgebildet ist, ein Medium in dem Einfüllstutzen (26) durch Sensormittel zu detektieren,
**dadurch gekennzeichnet, dass**
das Sensorelement (30) dazu ausgebildet ist, die Dichte des Mediums in dem Einfüllstutzen (26) durch Sensormittel zu detektieren,
und dadurch, dass
die Sensoreinheit (3) dazu ausgebildet ist, das durch das Sensormittel detektierte Medium im Hinblick auf mindestens zwei Treibstofftypen und/oder mindestens zwei Treibstoffsorten auf der Basis seiner Dichte zu unterscheiden.

2. Betankungsventil (22) nach Anspruch 1, **dadurch gekennzeichnet, dass**
das Sensorelement (30) dazu ausgebildet ist, die Dichte des Mediums in dem Einfüllstutzen (26) durch Sensormittel mithilfe von Ultraschall zu detektieren.

3. Betankungsventil (22) nach einem der vorhergehenden Ansprüche, **dadurch gekennzeichnet, dass**
das Sensorelement (30) dazu ausgebildet ist, die Dichte eines Gases als Medium in dem Einfüllstutzen (26) durch die Sensormittel zu detektieren.

4. Betankungsventil (22) nach einem der vorhergehenden Ansprüche, **dadurch gekennzeichnet, dass**
das Sensorelement (30) so angeordnet und ausgerichtet ist, dass es die Dichte des Mediums in dem Einfüllstutzen (26) zumindest im Wesentlichen senkrecht zur Erstreckung des Einfüllstutzens (26) durch die Sensormittel detektiert.

5. Betankungsventil (22) nach einem der vorhergehenden Ansprüche, **dadurch gekennzeichnet, dass**
das Betankungsventil (22) dazu ausgebildet ist, den Treibstofftyp und/oder die Treibstoffsorte mittels eines Ausgabeelements (32) an einen Benutzer zu kommunizieren.

6. Betankungsventil (22) nach einem der vorhergehenden Ansprüche, **dadurch gekennzeichnet, dass**
das Betankungsventil (22) dazu ausgebildet ist, den Treibstofftyp und/oder die Treibstoffsorte als Information zu einer weiteren Vorrichtung in drahtgebundener und/oder drahtloser Weise verfügbar zu machen.

7. Betankungsventil (22) nach einem der vorhergehenden Ansprüche, **dadurch gekennzeichnet, dass**
das Betankungsventil (22) dazu ausgebildet ist, in einer von dem Treibstofftyp und/oder der Treibstoffsorte abhängigen Weise eine Rückmeldung an einen Benutzer hinsichtlich dessen auszugeben, ob oder ob nicht der Treibstofftyp und/oder die Treibstoffsorte des durch das Sensormittel detektierten Mediums einem vorbestimmten Treibstofftyp und/oder einer vorbestimmten Treibstoffsorte entspricht.

8. Betankungsventil (22) nach einem der vorhergehenden Ansprüche, **dadurch gekennzeichnet, dass**
das Betankungsventil (22) dazu ausgebildet ist, das Leiten des Treibstoffs in einer von dem Treibstofftyp und/oder der Treibstoffsorte abhängigen Weise zu erlauben oder zu verhindern.

9. Tankfahrzeug (2), aufweisend
ein Betankungsventil (22) nach einem der Ansprüche 1 bis 8.

10. Betankungseinrichtung (2), vorzugsweise Betankungspumpe (2), aufweisend ein Betankungsventil (22) nach einem der Ansprüche 1 bis 8.

11. Tankfahrzeug (2) nach Anspruch 9 oder Betankungseinrichtung (2) nach Anspruch 10, **dadurch gekennzeichnet, dass**
das Tankfahrzeug (2) oder die Betankungseinrichtung (2) dazu ausgebildet ist, den Treibstofftyp und/oder die Treibstoffsorte als Information in drahtgebundener und/oder drahtloser Weise von dem Betankungsventil (22) zu empfangen.

12. Tankfahrzeug (2) nach Anspruch 11, **dadurch gekennzeichnet, dass**
das Tankfahrzeug (2) oder die Betankungseinrichtung (2) dazu ausgebildet ist, den Treibstofftyp und/oder die Treibstoffsorte mittels eines Ausgabeelements (32) an einen Benutzer zu kommunizieren.

13. Tankfahrzeug (2) nach Anspruch 11 oder 12, **dadurch gekennzeichnet, dass** das Tankfahrzeug (2) oder die Betankungseinrichtung (2) dazu ausgebildet ist, das Leiten des Treibstoffs in einer von dem Treibstofftyp und/oder der Treibstoffsorte abhängigen Weise zu erlauben oder zu verhindern.

14. Tankfahrzeug (2) nach einem der Ansprüche 11 bis 13, **dadurch gekennzeichnet, dass**
das Tankfahrzeug (2) oder die Betankungseinrichtung (2) dazu ausgebildet ist, in einer von dem Treibstofftyp und/oder der Treibstoffsorte abhängigen Weise eine Rückmeldung an einen Benutzer hinsichtlich dessen auszugeben, ob oder ob nicht der Treibstofftyp und/oder die Treibstoffsorte des durch das Sensormittel detektierten Mediums einem vorbestimmten Treibstofftyp und/oder einer vorbestimmten Treibstoffsorte entspricht.

## Revendications

1. Soupape de remplissage de carburant (22),
comprenant un tuyau de remplissage (26),
dans lequel la soupape de remplissage de carburant (22) est conçue pour transporter un carburant par le biais du tuyau de remplissage (26) dans un réservoir de carburant (11) d'un véhicule (1),
comprenant en outre une unité de détection (3) ayant un élément de détection (30) qui est disposé et conçu pour détecter un milieu à l'intérieur du tuyau de remplissage (26) au moyen d'un capteur,
**caractérisée en ce que**
l'élément de détection (30) est conçu pour détecter la densité du milieu à l'intérieur du tuyau de remplissage (26) au moyen du capteur,
et **en ce que**
l'unité de détection (3) est conçue pour distinguer le milieu détecté par le capteur en relation avec au moins deux types de carburant et/ou au moins deux qualités de carburant sur la base de sa densité.

2. Soupape de remplissage de carburant (22) selon la revendication 1, **caractérisée en ce que**
l'élément de détection (30) est conçu pour détecter la densité du milieu à l'intérieur du tuyau de remplissage (26) au moyen d'un capteur utilisant les ultrasons.

3. Soupape de remplissage de carburant (22) selon l'une quelconque des revendications précédentes, **caractérisée en ce que**
l'élément de détection (30) est conçu pour détecter la densité d'un gaz en tant que milieu à l'intérieur du tuyau de remplissage (26) au moyen du capteur.

4. Soupape de remplissage de carburant (22) selon l'une quelconque des revendications précédentes, **caractérisée en ce que**
l'élément de détection (30) est disposé et orienté de façon à détecter la densité du milieu à l'intérieur du tuyau de remplissage (26) au moins sensiblement perpendiculairement à l'étendue du tuyau de remplissage (26) au moyen du capteur.

5. Soupape de remplissage de carburant (22) selon l'une quelconque des revendications précédentes, **caractérisée en ce que**
la soupape de remplissage (22) est conçue pour communiquer le type de carburant et/ou la qualité du carburant à un utilisateur au moyen d'un élément de sortie (32).

6. Soupape de remplissage de carburant (22) selon l'une quelconque des revendications précédentes, **caractérisée en ce que**
la soupape de remplissage (22) est conçue pour mettre à disposition en tant qu'information le type de carburant et/ou la qualité du carburant à un autre appareil de manière câblée et/ou sans fil.

7. Soupape de remplissage de carburant (22) selon l'une quelconque des revendications précédentes, **caractérisée en ce que**
la soupape de remplissage de carburant (22) est conçue pour, en fonction du type de carburant et/ou de la qualité du carburant, délivrer un retour d'information à un utilisateur indiquant si oui ou non le type de carburant et/ou la qualité du carburant du milieu détecté au moyen du capteur correspond à un type de carburant et/ou à une qualité de carburant prédéterminé(e).

8. Soupape de remplissage de carburant (22) selon l'une quelconque des revendications précédentes, **caractérisée en ce que**
la soupape de remplissage de carburant (22) est conçue pour permettre ou empêcher le transport du carburant en fonction du type de carburant et/ou de la qualité du carburant.

9. Camion-citerne (2) ayant
une soupape de remplissage de carburant (22) selon l'une quelconque des revendications 1 à 8.

10. Installation de remplissage de carburant (2), de préférence pompe de remplissage de carburant (2) ayant
une soupape de remplissage de carburant (22) selon l'une quelconque des revendications 1 à 8.

11. Camion-citerne (2) selon la revendication 9 ou installation de remplissage de carburant (2) selon la revendication 10, caractérisé(e) en ce que le camion-citerne (2) ou l'installation de remplissage de carburant (2) est conçu(e) pour recevoir le type de carburant et/ou la qualité du carburant en tant qu'information de manière câblée et/ou sans fil depuis la soupape de remplissage de carburant (22).

12. Camion-citerne (2) selon la revendication 11, **caractérisé en ce que** le camion-citerne (2) ou l'installation de remplissage de carburant (2) est conçu(e) pour communiquer le type de carburant et/ou la qualité du carburant à un utilisateur au moyen d'un élément de sortie (32).

13. Camion-citerne (2) selon la revendication 11 ou 12, **caractérisé en ce que** le camion-citerne (2) ou l'installation de remplissage de carburant (2) est conçu(e) pour permettre ou empêcher le transport du carburant en fonction du type de carburant et/ou de la qualité du carburant.

14. Camion-citerne (2) selon l'une quelconque des revendications 11 à 13, **caractérisé en ce que**
le camion-citerne (2) ou l'installation de remplissage de carburant (2) est conçu(e) pour, en fonction du type de carburant et/ou de la qualité du carburant, délivrer un retour d'information à un utilisateur indiquant si oui ou non le type de carburant et/ou la qualité du carburant du milieu détecté au moyen du capteur correspond à un type de carburant et/ou à une qualité de carburant prédéterminé(e).
